# EUROPEAN PATENT APPLICATION

(11) **EP 0 947 861 A1**
(43) Date of publication of application: **06.10.1999**
(21) Application number: 99106609.3
(22) Date of filing: 31.03.1999
(51) Int. Cl.: G02B 6/26, G02B 6/28, G02B 6/293

(54) **Hybrid waveguiding optical device**

(30) Priority: 01.04.1998 US 52933
(71) Applicant: JDS FITEL INC., Nepean, Ontario K2G 5W8 (CA)
(72) Inventor: Duck, Gary, S., Nepean, Ontario K2J 3Z7 (CA); Delisle, Vincent, Ottawa, Ontario K2C 3L5 (CA)
(74) Representative: Frei, Alexandra Sarah

(57) **Abstract**

A compact multiplexing device having two monolithic waveguide blocks (52,58), preferably formed of glass are coupled to a dichroic GRIN lensed filter (60) disposed between the blocks. Each of the waveguide blocks have a waveguide concentrator (53) therein for providing output waveguides spaced at a convenient spacing of for example 125 µm and have opposite ends, spaced with much closer spacing, for example 25 µm. Advantageously, this allows for smaller waveguide blocks to be used, and a smaller GRIN lensed filter to be used.

Adjacent and between the two blocks (52 and 58) are two substantially quarter pitch graded index (GRIN) lenses (54 and 56) that provide a means of guiding, collimating and focusing light as required and as will be described. A filter (60) designed to pass light of wavelength 1330 nm and reflect light of wavelength 1550 nm is disposed between the two GRIN lenses (54 and 56). The filter (60) can be deposited or coated directly onto the end face of one of the lenses (54 or 56) or alternatively can be deposited or coated onto a light transmissive substrate such as glass which is sanwiched between the lenses.

## Description

### Field of the Invention

This invention relates to an optical multiplexing or demultiplexing device, and more particularly to an integrated optical device that uses integrated waveguide technology in combination with a GRIN lens and dichroic filter.

### Background of the Invention

Conventional WDM filters such as those optical filters comprising a pair of graded index (GRIN) lenses having an optical filter sandwiched therebetween, as are described in United States Patent 5,629,995 incorporated herein by reference, in the name of the applicant and is assigned to JDS Fitel Inc. In this patent a plurality of dichroic filters are cascaded providing a multiplexing and demultiplexing function. Heretofore, these filters have provided suitable multiplexing where the number of channels has been limited. For example dichroic filters have been found to be suitable in 8 or 16 channel systems or wherein channel spacing has been 100 GHz or more.

Currently, there is a need for smaller, integrated, optical multiplexing and demultiplxing devices wherein overall signal loss is minimized.

Waveguide devices having a waveguide disposed on a substrate are currently being developed. Typically these monolithic waveguide devices form various optoelectronic devices (OEDs) ranging from quantum well IR detectors to light sources. The coupling of radiation through the substrate is also possible in OEDs when the substrate is transparent.

One of the more difficult general problems to overcome concerning waveguides relates to efficiently coupling light into and out of these often layered, generally planar structures.

U.S. Patent 5,195,150 in the name of Stegmueller et al., assigned to Siemens Aktiengesellschaft, issued in 1993 relates to the coupling of light into a waveguide disposed on a substrate and including a mirror for reflecting light through the substrate discloses a plano-convex lens being integrated on a surface of the substrate lying opposite the waveguide. This device provides a means of coupling light from an optical fibre to a substrate within the waveguide chip. Although this device performs its intended function, it is very costly to manufacture and difficult to implement.

U.S. patent 5,447,695 entitled Waveguide-Optical Fiber Connection Structure And Waveguide-Optical Fiber Connection Method, in the name of Yamane Takashi et al, assigned to Fujitsu Limited of Japan, issued September 17 1996 discloses an improved simplified waveguide-optical fiber connection structure for connecting a waveguide to an optical fiber.

The waveguide-optical fiber connection structure comprises an optical fiber, a waveguide substrate having a waveguide integrally formed thereon and having a first guide groove formed thereon adjacent an end portion of the waveguide for positioning the optical fiber therein, and a fiber substrate provided in an opposing relationship to the first guide groove for cooperating with the first guide groove to hold the optical fiber thereon.

United States Patent 5,629,534 issued May 13, 1997, entitled Semiconductor device in the name of Inuzuka Hajime et al., discloses a monolithic photocoupler which is easy to integrate. An SOI structure is formed by providing a first insulation layer on a silicon substrate. The semiconductor single crystal region is further divided by trench insulation layers into separate regions. Light emitting elements are formed on one of the separated semiconductor single crystal region and light receiving elements are formed on the other semiconductor single crystal region. The light emitting elements are obtained by forming light emitting diodes made of GaAs or the like on the substrate using a heterogeneous growth process. An optical waveguide made of a material which is optically transparent and electrically insulative such as a TiO(2) film on each pair of light emitting and light receiving elements.

U.S. patent 4,455,696 entitled Self-aligned coupling of optical fiber to semiconductor laser or LED in the name of James K Carney, assigned to Honeywell Inc. issued Aug. 21, 1984 is directed to the self-aligned coupling of the core of an optical fiber to the narrow stripe emitting spot in the active layer of a narrow stripe semiconductor laser. In this invention a V-groove is etched into the same substrate onto which the epitaxial layers for the narrow stripe laser have been grown.

U.S. patent number 4,933,262 entitled method of making integrated optical component, in the name of Beguin; Alain M. J. assigned to Corning Incorporated discloses a method of making an integrated optical component in which a central planar region includes an optical circuit path and a lateral region includes an optical fiber positioning groove in alignment with the path. A glass body having central and lateral regions is coated with a mask material. A photolithographic technique is used to provide the mask material with a patterned opening in the central region corresponding in shape to the circuit path and a patterned opening in the lateral region corresponding to the shape of the alignment groove. A layer of resisting material is applied over the mask on the central region and the lateral region is etched to form the groove. The layer of resisting material is removed, and the zone of the central region that is exposed by the opening in the mask is subjected to an ion exchange process in order to form therein an optical path that is in registration with the fiber positioning groove.

Since many monolithic waveguide devices are merely components in larger optical systems, there is generally one common goal in many of the aforementioned patents; that is, coupling light into and out of monolithic waveguide structures. Although some of these patents are concerned with other aspects, the challenge of efficiently coupling light into and out of these monolithic waveguide structures without unwanted loss, and more particularly from an optical fibre into a planar or near planar waveguide chip remains a goal.

Currently, most technologies that relate to coupling light between an optical fibre and a waveguide chip attempt to provide solutions for enhancing the direct coupling between a fibre end face and an end or side of a waveguide chip. V-grooves and various other means have been employed to assist in the physical coupling of the fibre end face with a face of a waveguide chip, however these methods tend to be costly and difficult to employ.

It is believed that heretofore the combination of monolithic waveguide chips with bulk optics, to provide one or more functions is not known.

It is an object of this invention to provide a device for multiplexing optical signals wherein a waveguide concentrator chip provides a plurality of closely spaced waveguides at one end for coupling with a GRIN lensed dichroic filter element.

### Summary of the Invention

In accordance with the invention, there is provided, an optical device comprising:
a first optical waveguide block having an outwardly facing end and an inwardly facing end;
a second optical waveguide block having an outwardly facing end and an inwardly facing end facing the inwardly facing end of the first optical waveguide block;
lens means disposed between the inwardly facing ends of the first and second waveguide blocks for collimating and focusing sub-beams of light between the first and second waveguide blocks;
the first and second waveguide blocks each having a plurality of waveguides disposed therein extending substantially longitudinally from the inwardly facing end to the outwardly facing end, the waveguides being more closely spaced at inwardly facing ends than at outwardly facing ends.

In accordance with the invention, there is provided, an optical device comprising:
a first optical waveguide block having an outwardly facing end and an inwardly facing end;
a second optical waveguide block having an outwardly facing end and an inwardly facing end facing the inwardly facing end of the first optical waveguide block;
filter means including lens means disposed between the inwardly facing ends of the first and second waveguide blocks for filtering predetermined wavelengths of light so as to allow some wavelengths of light to pass from one of the waveguide blocks to the other, and for reflecting some wavelengths of light back into one of the first and second waveguide blocks;
the first and second waveguide blocks each having a plurality of waveguides disposed therein extending substantially longitudinally from the inwardly facing end to the outwardly facing end, the waveguides being more closely spaced at inwardly facing ends than at outwardly facing ends.

In accordance with the invention, there is further provided, an optical device having two monolithic waveguide blocks each waveguide having an inwardly facing end face and an outwardly facing end face, each block having waveguides disposed therein that are optically aligned with waveguides on the other block; two substantially quarter pitch GRIN lenses between the waveguide blocks for collimating and focusing light launched into the waveguides on at least one block; and, a wavelength dependent optical element between the two GRIN lenses.

Advantageously, this invention provides a compact hybrid device that requires a single optical filter element to multiplex for example, from 8 to 64 waveguides carrying a first channel with a second channel of light.

### Brief Description of the Drawings

Exemplary embodiments of the invention, will now be described in conjunction with the drawings, in which:
Fig. 1 is a prior art schematic diagram of an optical system wherein 64 fibres carrying a an optical signal of a first predetermined wavelength are multiplexed onto 64 bi-directional optical fibres each carrying an optical signal of a second predetermined wavelength of light;
Fig. 2 is a block diagram of a prior art GRIN lensed dichroic filter element;
Fig. 3 is a block diagram of a waveguide chip having a branching network of waveguides therein; and,
Fig. 4 is a schematic diagram of an optical system providing the same functionality of the circuit of Fig. 1 however wherein the device is less complex and more compact, in accordance with the invention.

### Detailed Description

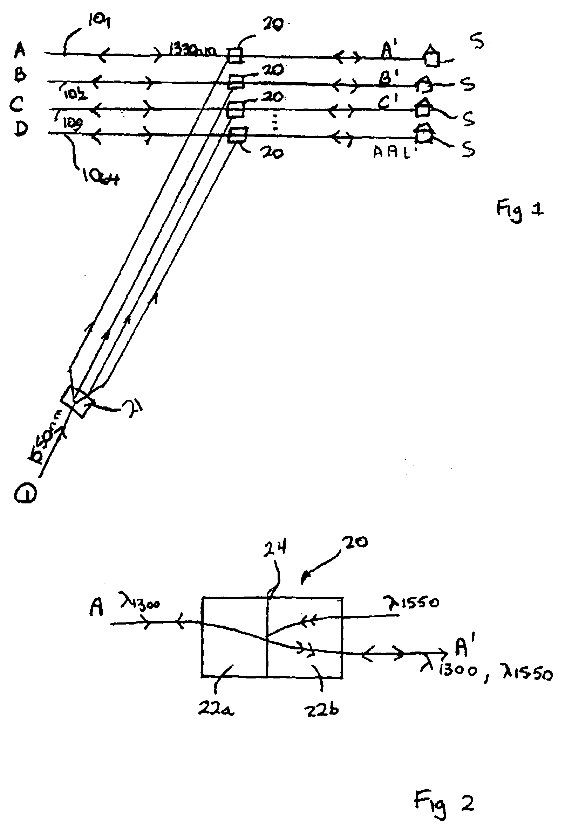

Referring now to Fig. 1, a communications system is shown wherein 64 optical fibres 10₁ to 10₆₄ (not all shown) provide bi-directional communication at a wavelength of 1330 nm between a transmitting end (at the left) and 64 subscribers S. Optical multiplexers 20 are disposed intermediate the two ends of each of the optical fibres 10₁ to 10₆₄. The multiplexers can be of various known types, for example as is shown in Fig. 2, wherein each multiplexer consists of a dichroic optical filter 24 sandwiched between two back to back collimating GRIN lenses 22a and 22b.

In operation, the circuit of Fig. 1 works in the following manner. Each of the 64 signals A', B', C', ....AAL' are transmitted between subscribers and a single corresponding transmitting and receiving end A, B, C,... AAL respectively. A single 1550 nm signal to be multiplexed is divided by a 1 to 64 splitter 21 and the 64 branches carrying 1550 nm are each directed to a different one of the 64 multiplexers 20 thereby providing a same 1550 nm signal having 1/64^{th} of the power of the original single signal to each subscriber.

Although the embodiment shown in the circuit of Fig. 1 performs its intended function, it is bulky, and very costly to implement. For example, the 1 to 64 splitter is comprised of nine 1 to 8 splitters such that a first 1 to 8 splitter has its 8 output fibres feeding into 8 1 to 8 splitters to obtain a 1 to 64 splitting function. Furthermore, this embodiment requires 64 multiplexor filters such as the one shown in Fig. 2. Yet still further, this embodiment requires a substantial amount of optical fibre for coupling between splitters and for connecting the 64 splitter outputs to the fibres 10₁ to 10₆₄. Of course another disadvantage of this prior art embodiment is that signal losses are experienced at each optical fibre coupling.

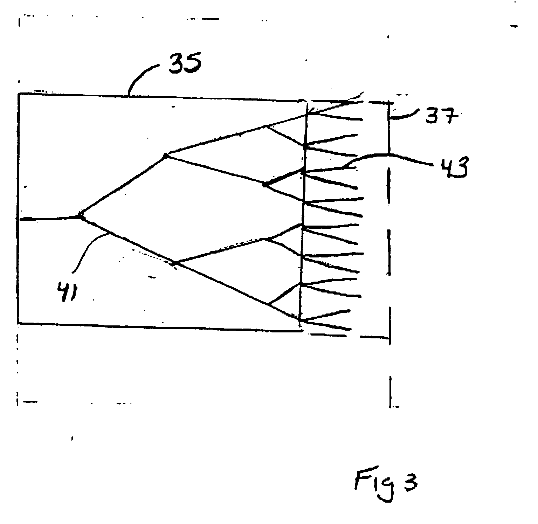

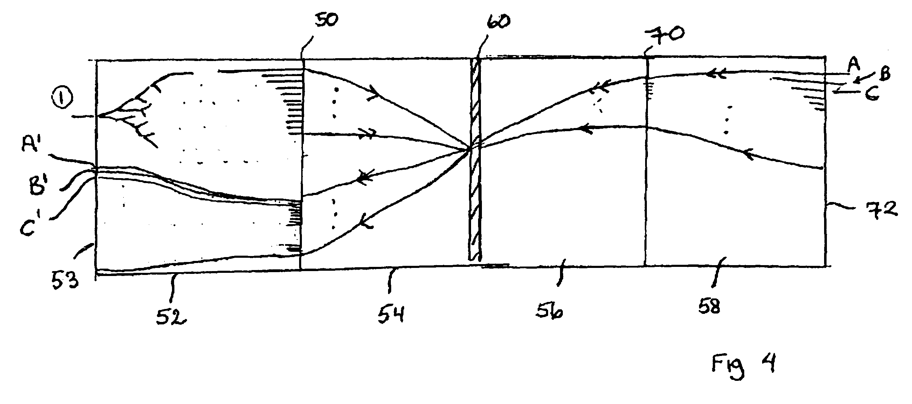

This invention which will now be described in accordance with Figs. 3 and 4, provides the function of the circuit of Fig. 1 and is significantly more compact requiring many fewer discrete components.

The circuit of Fig. 4 comprises two monolithic glass blocks 52 and 58 each having closely spaced waveguides disposed therein, via any well known technique that will provide a suitable refractive index difference between the waveguides region and the adjacent glass region serving as a cladding such as ion diffusion or ion exchange processes. Adjacent and between the two blocks 52 and 58 are two substantially quarter pitch graded index (GRIN) lenses 54 and 56 that provide a means of guiding, collimating and focusing light as required and as will be described. A filter 60 designed to pass light of wavelength 1330 nm and reflect light of wavelength 1550 nm is disposed between the two GRIN lenses 54 and 56. The filter 60 can be deposited or coated directly onto the end face of one of the lenses 54 or 56 or alternatively can be deposited or coated onto a light transmissive substrate such as glass which is sandwiched between the lenses. One of the difficulties that this circuit overcomes, is the fact that waveguides within the monolithic glass blocks 52 and 58 may not cross over one another such as the optical fibres do in the prior art configurations.

The first waveguide block 52 has a first waveguide network, (shown in more detail in Fig. 3 only as a 1:16 splitter,) disposed thereon in the form of a 1:64 splitter (shown at the top of the block) having a single input waveguide and 64 substantially parallel waveguides at another end with a spacing of 25µm between adjacent waveguides. Below on the same block 52 is concentrator network 53 of substantially parallel closely spaced waveguides having a spacing of 25µm that fan out as spaced substantially parallel input/output waveguides at an outward facing end of the block 52 having a spacing of 125 µm between adjacent waveguides.

The second waveguide block 58 has a group of 64 waveguides forming a concentrator 72 similar to the concentrator 52 in the first block wherein waveguides are spaced with a 25µm spacing at one end and a 125µm spacing at an outwardly facing end.

In operation, the circuit operates in the following manner. At an input/output outwardly facing end of the first block 52 a input signal having a wavelength of 1550 nm is launched onto the waveguide labeled 1. The signal is subsequently divided by the splitter network and propagates along 64 waveguides toward the GRIN lens 54. Each of the sub-beams exiting the 64 end faces of the 1:64 splitter propagate through the GRIN lens 54 and are directed toward the filter 60 as substantially collimated sub-beams. Upon being incident at the filter 60, the 64 sub-beams are reflected and are essentially folded onto the 25 µm spaced input waveguide ends of the concentrator network 53. The 64 sub-beams of light having a wavelength of 1550 nm then propagate to the 125 µm spaced output ends of the concentrator which are coupled to subscribers A', B', ... . The 64 bi-directional 1330 nm signals are launched in one direction from the input/output end of the concentrator 72 on the waveguide block 58. The filter 60 is designed to pass light of wavelength 1330 nm and the GRIN lenses 56 and 54 provide a convenient means of directing the 1330 nm beams through the filter in a collimated form and for focusing the beams so that they efficiently couple into corresponding waveguides as focused beams. This architecture conveniently allows the 1330 nm signal to pass bi-directionally from one end of the device to the other, and at the same time provides a means of multiplexing the 1550 nm signal into each of the 64 subscriber's homes.

Although in this instance, the exemplary embodiment this circuit is limited to 64 subscribers, in practice it is limited by the number of waveguides that can be provided within the substrate without unacceptable cross talk levels resulting from poor isolation between adjacent closely spaced waveguides.

One particular advantage of this circuit is that standard interwaveguide spacing of 125 µm can be provided at one end of the block(s) 52 and/or 58, compatible with commercially available ribbon fibre for coupling signals into and out of the blocks 52 and/or 58, and at the same time, smaller interwaveguide spacing is provided at opposite ends of each block. The advantage of providing smaller spacing at the inside end of the blocks 52, 58 than at the outwardly facing ends is that the blocks can be shorter in length. For example if the 1:64 splitter was to have 64 waveguides at an output end with a spacing of 125 µm between adjacent waveguides, the overall dimensions of the 1:64 splitter would be significantly larger. Providing a smaller block is more cost effective more manufacturable and more desirable.

Of course numerous other embodiments can be envisaged without departing from the spirit of the invention.

## Claims

1. An optical device comprising:
a first optical waveguide block having an outwardly facing end and an inwardly facing end;
a second optical waveguide block having an outwardly facing end and an inwardly facing end, the inwardly facing end facing the inwardly facing end of the first optical waveguide block;
lens means disposed between the inwardly facing ends of the first and second waveguide blocks for collimating and focusing sub-beams of light between the first and second waveguide blocks;
the first and second waveguide blocks each having a plurality of waveguides disposed therein extending substantially longitudinally from the inwardly facing end to the outwardly facing end, the waveguides being more closely spaced at inwardly facing ends than at outwardly facing ends.

2. An optical device as defined in claim 1, wherein the first and second waveguide blocks each include a plurality of waveguides that form a concentrator.

3. An optical device as defined in claim 2 wherein each concentrator comprises a plurality of waveguides at an outwardly facing end having spacing between cores of adjacent waveguides of 125 µm.

4. An optical device as defined in claim 2 further comprising a waveguide network in the form of a splitter for splitting an optical beam into a plurality of sub-beams.

5. An optical device as defined in claim 3 further comprising a waveguide network in the form of a splitter for splitting an optical beam into a plurality of sub-beams.

6. An optical device as defined in claim 3 further comprising an at least partially reflecting optical element disposed between the first and second waveguide blocks.

7. An optical device as defined in claim 2 wherein the lens means comprises a pair of lenses.

8. An optical device as defined in claim 7 wherein the pair of lenses are two back to back substantially collimating GRIN lenses.

9. An optical device as defined in claim 2 wherein the lens means comprises a pair of back to back substantially collimating GRIN lenses.

10. An optical device as defined in claim 5 wherein the lens means comprises a pair of back to back substantially collimating GRIN lenses.

11. An optical device as defined in claim 9, further comprising an optical filter disposed between the two back to back substantially collimating GRIN lenses.

12. An optical device as defined in claim 10 including an at least partially reflecting optical element disposed between the GRIN lenses.

13. An optical device as defined in claim 10 wherein the at least partially reflecting optical element is a wavelength dependent optical element.

14. An optical device having two monolithic waveguide blocks each waveguide having an inwardly facing end face and an outwardly facing end face, each block having waveguides disposed therein that are optically aligned with waveguides on the other block; two substantially quarter pitch GRIN lenses between the waveguide blocks for collimating and focusing light launched into the waveguides on at least one block; and, a wavelength dependent optical element between the two GRIN lenses.

15. An optical device as defined in claim 14 wherein at least a plurality of the waveguides on each block are in the form of a concentrator, having wider spacing at the outwardly facing end of each block than at the inwardly facing end of each block.

16. An optical device as defined in claim 15 wherein one of the two blocks has an input port and a plurality of output ports at the outwardly facing end face; and, wherein the other of the two blocks has a plurality of input ports at the outwardly facing end face.

17. An optical device as defined in claim 16 wherein the input and output ports serve as input/output ports.

18. An optical device as defined in claim 15 wherein the at least a plurality of waveguides on each block have a spacing therebetween of approximately 125 µm at an outwardly facing end, and wherein the spacing between the waveguides at an inwardly facing end is substantially less than 50 µm.
